(19) Europäisches Patentamt
European Patent Office
Office européen des brevets

(11) **EP 4 484 898 A1**

(12) **EUROPEAN PATENT APPLICATION**

(43) Date of publication:
01.01.2025 Bulletin 2025/01

(21) Application number: 23275096.8

(22) Date of filing: **29.06.2023**

(51) International Patent Classification (IPC):
*G01D 5/244* (2006.01)  *G01D 5/38* (2006.01)

(52) Cooperative Patent Classification (CPC):
G01D 5/38; G01D 5/24485

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Renishaw PLC**
**Wotton-under-Edge, Gloucestershire GL12 8JR (GB)**

(72) Inventor: **The designation of the inventor has not yet been filed**

(74) Representative: **Rolfe, Edward William et al**
**Patent Department**
**Renishaw plc**
**New Mills**
**Wotton-under-Edge**
**Gloucestershire GL12 8JR (GB)**

(54) **ENCODER APPARATUS**

(57)    A position encoder apparatus comprising a scale and a readhead comprising at least one scale-signal sensor configured to detect a scale signal from which at least one position signal indicative of the relative position of the scale and readhead along the scale's measuring direction is generated and output, in which the encoder apparatus is configured to compensate for a change in the relative pitch of the readhead and scale so as to reduce pitch-induced position-displacement error in the at least one position signal.

Fig.4

EP 4 484 898 A1

**Description**

This invention relates to an encoder apparatus, in particular a position measurement encoder apparatus comprising a scale and a readhead which are moveable relative to each other.

As is well known, a position measurement encoder apparatus typically comprises a scale having a series of features which the readhead can read to determine and measure relative position (and/or its derivatives such as velocity and/or acceleration). Encoders are typically categorised as being either incremental or absolute. A scale for an incremental encoder comprises a series of generally periodic features which the readhead detects to determine a relative position and movement of the scale and readhead. One or more reference marks can be provided on the scale to provide reference positions from which the relative position of the scale and readhead can be counted. A scale for an absolute encoder comprises features defining unique positions along the scale length, for instance a series of unique absolute positions, and can enable a readhead to determine its absolute position on start-up without requiring any relative motion.

As taught in International Patent Application no. PCT/GB2005/002431 (published as WO2005/124283), it is known to align a readhead to a scale during installation so as to minimise angular misalignment between the readhead and the scale to help produce the optimum signal (e.g. optimise signal intensity/amplitude). Such installation solutions can comprise using an angle sensor in the readhead to determine angular alignment and provide an output indicative of angular misalignment which a user can use to judge how to physically adjust the angle of the readhead and/or scale so as to reduce angular misalignment. As also explained in WO2005/124283, the angle sensor can be used in a calibration routine to compensate for the effect of angular misalignment on electrical signal amplitude.

Our inventors wanted to provide an improved encoder, in particular an encoder with improved accuracy, in particular, an encoder with reduced position-displacement error.

According to a first aspect of the invention there is provided a position encoder apparatus comprising a scale and a readhead comprising at least one scale-signal sensor configured to detect a scale signal from which at least one position signal indicative of the relative position of the scale and readhead along the scale's measuring direction is generated and output, in which the encoder apparatus is configured to compensate for a change in the relative pitch of the readhead and scale so as to reduce pitch-induced position-displacement error in the at least one position signal.

A position encoder apparatus can be sensitive to changes in the relative pitch of the scale and readhead. For instance, a change in the relative pitch of the scale and readhead could cause a change/displacement in the signal detected by the readhead, which could be incorrectly interpreted and reported as a change in the relative position/displacement of the readhead and scale along the position encoder apparatus' measurement dimension, thereby leading to a pitch-induced position-displacement error.

As will be understood, the term "pitch" in this document adopts the normal meaning of "pitch" in the established right-hand rule for the "pitch", "roll" and "yaw" rotations of an object movable along a direction of travel (in this case, along the readhead's/position encoder's measuring dimension). Accordingly, relative "pitch" of the scale and readhead is rotation about a transverse/lateral axis, i.e. an axis that extends perpendicular to the measuring dimension/direction of travel and also extends perpendicular to the readhead's "vertical" or "rideheight" dimension (i.e. the dimension of separation of the readhead and scale, which as will be understood will be normal/perpendicular to the scale).

Accordingly, when the readhead and scale are installed, a change in the relative pitch is a change in the relative angular orientation of the readhead and the scale, at least at the point of measurement on the scale, about an axis that lies parallel to the scale at the point of measurement and extends perpendicularly to the scale's measuring direction.

As will also be understood, a change in relative pitch of the scale and readhead could be caused by a rotation of the readhead and/or scale as a whole, or for instance due to a change in the gradient of the scale along the measurement direction, e.g. due to scale undulations. Indeed, once the position encoder apparatus has been installed, the most likely cause of a change in the relative pitch of the scale and readhead at the point of measurement is a change in gradient of the scale due to undulations in the scale. The present invention helps to reduce the effect of such above-described pitch-induced position-displacement errors.

The readhead of a position encoder apparatus might have a "pitch-insensitive axis", which is an axis, about which the relative pitch of the scale and readhead may be changed without causing a position-displacement error in the signal detected by the readhead, and hence without causing a position measurement/displacement error. For example, when installed, the pitch-insensitive axis will typically be parallel to the scale and extend perpendicularly to the scale's measuring direction. As will be understood, for rotary encoders having a ring-scale, (i.e. scale formed on the circumferential edge of a ring) the orientation of the pitch-insensitive axis to the scale will be as measured at the current readhead reading location. As explained in the previous paragraph, a likely source of relative pitch is a local change in gradient of the scale. Accordingly, the pitch-insensitive axis could be referred to as a "scale-gradient-insensitive axis".

Some encoders, such as the TONiC™ and ATOM™ encoders available from Renishaw plc have a design which means that when installed correctly, the "pitch-insensitive axis" lies on the surface of the scale. Accordingly, in theory, a change in the relative pitch of the scale and readhead, e.g. a variation in the gradient of the scale along its length, should not cause a pitch-induced position-displacement error. However, even if such an encoder apparatus is set up such that the accuracy of their position signals are not sensitive to changes in the relative pitch of the scale and readhead, changes in the relative configuration of the readhead and scale during use (e.g. changes to the readhead's "ride-height", which is the distance between the scale and readhead measured normal to the scale), can cause the pitch-insensitive axis to move away from the scale and therefore cause the encoder to become liable to such scale pitch-induced position-displacement errors. Said compensation can occur during/as part of the generation of the at least one position signal so as to reduce scale-pitch induced measurement error in the position signal before it is generated. Optionally, said compensation occurs after the at least one position signal has been generated, and therefore said compensation acts to correct the generated position signal and thereby reduce scale-pitch induced measurement error in the position signal.

Said compensation can be done within the readhead, or within a device external to the readhead, e.g. in a controller or within an interface unit that is separate from the readhead. References to controller include, for instances, the controller of the machine on which the position encoder apparatus is installed. In other words, the readhead, or a device external to the readhead, could be configured to perform said compensation.

The position encoder apparatus (e.g. at least one of the readhead, or a device external to the readhead such as a controller and/or an interface unit) can comprise means, for instance a "compensator", e.g. electronics and/or software (for instance one or more processing devices), configured to compensate for a change in the relative pitch of the readhead and scale so as to reduce pitch-induced position-displacement error in the at least one position signal. As will be understood, processing devices can include bespoke processors configured for the specific application (e.g. a field programmable gate array "FPGA") as well as more generic processors which can be programmed (e.g. via software) in accordance with the needs of the application in which it is used.

The encoder apparatus (for example the readhead, and/or said device external to said readhead) can be configured to identify, e.g. detect, (e.g. at least an indication of) a change in the relative pitch of the readhead and scale.

Said identification/detection/monitoring can be done within the readhead, or within a device external to the readhead, e.g. in a controller or within an interface unit that is separate from the readhead. Accordingly, the encoder apparatus (for example the readhead, and/or said device external to said readhead) can be configured to identify/detect/monitor for (e.g. at least an indication of) a change in the relative pitch of the readhead and scale. In a preferred embodiment, the encoder apparatus (for example the readhead, and/or said device external to said readhead) is configured to monitor continuously, as the scale and readhead move relative to each other, for (e.g. at least an indication of) a change in the relative pitch of the readhead and scale.

Accordingly, said encoder apparatus (for example the readhead) can comprise a "pitch identifier", "pitch detector" or "pitch monitor" configured to identify, detect or monitor for (an indication of) a change in the relative pitch of the readhead and scale. In a preferred embodiment, said encoder apparatus (for example the readhead) comprises a "pitch monitor" configured to monitor continuously, as the scale and readhead move relative to each other, for (an indication of) a change in the relative pitch of the readhead and scale.

Said pitch identifier/detector/monitor can comprise electronics and/or software (for instance one or more processing devices) for determining (an indication of) a change in the relative pitch of the readhead and scale. Said pitch identifier/detector/monitor can comprise one or more sensors (one or more "pitch identifier/detector/monitor" sensors) via which (an indication of) a change in the relative pitch of the readhead and scale can be determined. Accordingly, the encoder apparatus (for example the readhead) can comprise one or more sensors (one or more "pitch identifier/detector/monitor" sensors) via which (an indication of) a change in the relative pitch of the readhead and scale can be determined. In preferred embodiments, the readhead comprises said one or more "pitch identifier/detector/monitor" sensors. This can be beneficial for cost, assembly and/or metrological performance reasons. Such one or more sensors (one or more "identifier/detector/monitor sensors") can be configured to detect a signal at least one aspect of which (e.g. its position, shape, size, form as it falls on the sensor) is affected by the relative pitch of the readhead and scale. Accordingly, said identifying/detecting/monitoring can comprise providing (said pitch identifier/detector/monitor can be configured to provide) an output that is dependent on at least one aspect of the signal falling on the sensor (one or more "pitch identifier/detector/monitor" sensors) (wherein said output is suitable for compensating for a change in the relative pitch of the readhead and scale so as to reduce pitch-induced position-displacement error in the at least one position signal). Accordingly, the encoder apparatus (e.g. the readhead, a controller, an interface unit) can be configured to use said output to compensate for a change in the relative pitch of the readhead and scale so as to reduce pitch-induced position-displacement error in the at least one position signal.

Said one or more (pitch identifier/detector/monitor) sensors can comprise said at least one scale-signal sensor. This can be beneficial for cost, assembly and/or metrological performance reasons. In other words, at least one sensor can be used for determining both: i) the at least one position signal; and ii) said indication of a change in the relative pitch of the scale and readhead. For example, said one or more (pitch identifier/detector/monitor) sensors and said at least one scale-signal sensor could be one and the same sensor. Indeed, the same signal that is used to determine the at least one position signal indicative of the relative position of the scale and readhead along the scale's measuring direction can be used to determine said indication of a change in the relative pitch of the readhead and scale. Optionally, said one or more (pitch monitor) sensors are different to said at least one scale-signal sensor.

Said compensation can be based on the output/outcome of said pitch monitor/monitoring (or said pitch identification/detection). In particular, said compensation could be based on the current/instantaneous/real-time output of said pitch monitor/monitoring (or said pitch identification/detection). This is in contrast, for instance, to using a pre-generated error map which is used to reduce pitch-induced position-displacement error in the at least one position signal based on the current read position.

Of course, in an alternative embodiment, the output of said pitch monitor/monitoring (or said pitch identification/detection) could be used to update an error map or function, which is subsequently used to compensate for a change in the relative pitch of the readhead and scale so as to reduce pitch-induced position-displacement error in the at least one position signal. Such updating of an error map or function could take place during a calibration routine (e.g. whilst the readhead is in a calibration mode) and/or during normal operation of the readhead (e.g. whilst the readhead is in its normal position-reporting mode, e.g. during which its output is used to control the operation of the machine on which it is installed).

Compensating for a change in the relative pitch of the readhead and scale so as to reduce pitch-induced position-displacement error in the at least one position signal can comprise advancing or retarding the relative position indicated by the at least one position signal. The extent to which the at least one position signal is advanced or retarded can be dependent on the outcome of said monitoring/the output of said pitch monitor. For instance, the extent to which the at least one position signal is advanced or retarded can be dependent on the current/instantaneous/real-time output of said pitch monitor/monitoring, e.g. dependent on the output of said at least one (pitch monitor) sensor. Optionally, the extent to which the at least one position signal is advanced or retarded can be derived from an error map or function, e.g. the content/form of which was generated/derived from said monitoring/pitch monitor (which as described in the preceding paragraph could occur during a calibration routine and/or during normal operation of the readhead).

Said monitoring can comprise analysing (e.g. said pitch monitor can be configured to analyse) the distortion/-deformation of a signal falling on a sensor (e.g. on the at least one scale-signal sensor and/or on the at least one (pitch monitor) sensor). For instance said monitoring can comprise analysing (e.g. said pitch monitor can be configured to analyse) the distortion/deformation of a scale signal falling on a sensor (e.g. on the at least one scale-signal sensor and/or on the at least one (pitch monitor) sensor). In particular, it can comprise determining the distortion/deformation of the signal along the measuring dimension.

The encoder apparatus can be configured such that the signal falling on the sensor (e.g. on the at least one scale-signal sensor and/or on the at least one (pitch monitor) sensor) has periodic content. As described above, optionally the at least one scale-signal sensor and the at least one (pitch monitor) sensor can be one and the same sensor. As will be understood, a signal created by an incremental scale will typically inherently have periodic content. It is also the case that a signal created by an absolute scale can have periodic content. For instance, the absolute scale could comprise at least one periodic scale track which generates a periodic scale signal. Even if the absolute scale has its absolute position information embedded within an aperiodic structure (e.g. absolute scale has absolute position embedded within it by omitting select scale lines from what is otherwise a periodic arrangement of scale lines, such as that described in WO2002/084223), there can still be periodic content in the signal falling on the sensor (e.g. on the at least one scale-signal sensor and/or on the at least one (pitch monitor) sensor).

In those embodiments in which the signal falling on the sensor (e.g. on the at least one scale-signal sensor and/or on the at least one (pitch monitor) sensor) has periodic content, determining the distortion/deformation of the signal can comprise analysing the periodic content of the signal falling on the sensor (e.g. on the at least one scale-signal sensor and/or on the at least one (pitch monitor) sensor). For instance, this can comprise analysing how the period of the signal varies across the sensor (i.e. along the measuring dimension). For instance, this could be done via analysing the positions of the maxima and minima of a periodic structure across the sensor, e.g. to analyse if, and optionally to what extent, how the relative positions of the maxima and minima change across the sensor (e.g. are they consistently spaced, or does their spacing vary across the sensor.

Said monitoring can comprise analysing (said pitch monitor can be configured to analyse) the deformation/distortion of a signal (e.g. a scale signal) falling on the at least one scale-signal sensor (which is configured to detect a scale signal from which at least one position signal indicative of the relative position of the scale and readhead is generated). Accordingly, the same sensor can be used for both: i) determining a/the relative position of the scale and readhead along the scale's measuring direction; and ii) for determining the distortion/deformation of a signal falling on a sensor (which is used to determine the/a change in the relative pitch of the readhead and scale). Said monitoring can comprise analysing (said pitch monitor can be configured to analyse) the deformation/distortion of the scale signal from which the at least one position signal indicative of the relative position of the scale and readhead is generated. Accordingly, the same <u>signal</u> can be used for both: i) determining a/the relative position of the scale and readhead along the scale's measuring direction; and ii) for determining the distortion/deformation of a signal falling on a sensor (which is used to determine the/a change in the relative pitch of the readhead and scale).

The position encoder apparatus can be configured to output a signal (e.g. a "pitch signal") indicative of the relative pitch of the readhead and scale. The position encoder apparatus can be configured to output said signal indicative of the relative pitch of the readhead and scale to (or in a format suitable for) another system/apparatus/processor device and/or configured to output said signal indicative of the relative pitch of the readhead and scale to (or in a format suitable) for a user/human (e.g. in the form of a human-sensible signal (e.g. a visual or audible signal)).

The position encoder apparatus (for example at least one of, the readhead, a controller, and an interface unit) can be further configured to determine a separation signal indicative of the separation between the readhead and scale (e.g. in the dimension perpendicular to both the measuring dimension and the axis about which pitch is determined). Optionally, the separation signal is factored into said compensating for a change in the relative pitch of the readhead and scale so as to reduce pitch-induced position-displacement error in the at least one position signal. In other words, compensating for a change in the relative pitch of the readhead and scale so as to reduce pitch-induced position-displacement error in the at least one position signal can comprise using said separation signal.

Accordingly, the position encoder apparatus (e.g. at least one of the readhead, a controller and/or an interface unit) can comprise means, for instance a "separation monitor" e.g. electronics and/or software (for instance one or more processing devices), configured to determine a separation signal indicative of the separation between the readhead and scale. The position encoder apparatus (for example the readhead) can be configured to determine continuously, as the scale and readhead move relative to each other, said separation signal. Optionally, the position encoder apparatus (for example the readhead) can be configured to determine at intervals (regular or irregular) said separation signal.

The position encoder apparatus (e.g. the readhead, for instance a "separation monitor") can comprise one or more sensors (one or more "separation sensors") via which a separation signal indicative of the separation between the readhead and scale can be determined. Accordingly, the encoder apparatus (for example the readhead) can comprise one or more sensors (one or more separation sensors) via which a separation signal indicative of the separation between the readhead and scale can be determined. Such one or more sensors (one or more separation sensors) can be configured to detect a signal at least one aspect of which (e.g. its position, shape, size, form as it falls on the sensor) is affected by the relative separation of the readhead and scale. Determining a separation signal can comprise providing (said separation sensor/monitor can be configured to provide) an output that is dependent on at least one aspect of the signal falling on the separation monitor sensor.

Said one or more (separation) sensors can comprise said at least one scale-signal sensor. In other words, at least one sensor can be used for determining both: i) the at least one position signal; and ii) said separation signal (and optionally additionally: iii) said indication of a change in the relative pitch of the scale and readhead). For example, said one or more (separation) sensors and said at least one scale-signal sensor could be one and the same sensor. Indeed, the same signal that is used to determine the at least one position signal indicative of the relative position of the scale and readhead along the scale's measuring direction can be used to determine said separation signal (and optionally said indication of a change in the relative pitch of the readhead and scale). Optionally, said one or more (separation) sensors are different to said at least one scale-signal sensor (and optionally different to the one or more "pitch monitor" sensors).

In a particularly preferred embodiment, the signal indicative of the separation between the sensor and the readhead is determined from the apparent size of a feature of said scale signal falling on the one or more separation sensors. For instance, the encoder apparatus could be configured to determine said separation signal based on the period size of said scale signal.

The position encoder apparatus can be configured to output a signal (e.g. a "separation signal") indicative of the relative separation of the readhead and scale. The position encoder apparatus can be configured to output said signal indicative of the relative separation of the readhead and scale to (or in a format suitable for) another system/apparatus/processor device and/or configured to output said signal indicative of the relative separation of the readhead and scale to (or in a format suitable) for a user/human (e.g. in the form of a human-sensible signal (e.g. a visual or audible signal)).

The position encoder apparatus could comprise an incremental position encoder apparatus. Accordingly, the scale can comprise an incremental scale track, comprising a series of periodic features. One or more reference marks can be embedded within or located adjacent the incremental scale track.

The position encoder apparatus could comprise an absolute position encoder apparatus. Accordingly, the scale can comprise an absolute scale track, comprising a series of position features defining an absolute scale track. As will be understood, an absolute scale track differs to an incremental scale track (with or without reference marks) in that its features define a series of unique positions along the length of the scale which can be readhead by the readhead such the relative position of the readhead and scale can be determined (e.g. on start-up) at any position along the scale without requiring movement to a reference position (e.g. a reference mark). Examples of absolute scales include those described in US Patents US7499827 and US5279044. The scale could comprise separate incremental and absolute scale tracks. Optionally, the incremental and absolute scale features are combined in one track. For instance, the absolute scale features could be superimposed on the periodic incremental scale features. As is known, and as is explained in the prior art referred to above in this paragraph, absolute position information can be encoded in a scale track by omitting select position features from an otherwise periodic series of position features.

The position encoder apparatus/scale could be a magnetic, optical, capacitive, or inductive position encoder apparatus/scale. As will be understood, in the case of an optical position encoder apparatus/scale, the readhead can comprise at least one light source which is configured to illuminate the scale. In the case of an optical position encoder apparatus/scale, the scale signal can comprise an optical scale signal. Such an optical scale signal could comprise an optical scale pattern, for instance a fringe pattern. Such an optical scale signal could comprise a shadow-cast representation of a portion of the scale (i.e. the portion currently in a reading position with the readhead). Such an optical scale signal could comprise an image of the scale (for instance a Talbot-image) of the scale.

Preferably the scale is a reflective scale member (in which case the light source(s) and sensor(s) are on the same side of the scale member). As will be understood, references herein to "light" and "optical" encompasses electromagnetic radiation (EMR) anywhere in the infra-red to the ultra-violet range. For example, the light source could be an infra-red light source.

According to a second aspect of the invention there is provided a position encoder apparatus comprising a scale and a readhead comprising at least one scale-signal sensor configured to detect a scale signal from which a position signal indicative of the relative position of the scale and readhead along the scale's measuring direction can be generated, in which the encoder apparatus is configured to generate at least one such position signal from a scale signal detected by the scale-signal sensor and also configured to determine a separation signal indicative of the separation between the readhead and scale. In particular, the encoder apparatus can be configured to determine a separation signal indicative of the separation between the readhead and scale based on a scale signal.

As will be understood, features described above in connection with the first aspect of the invention are applicable to this second aspect of the invention and vice-versa.

For instance, as described above in connection with the first-aspect of the invention, the position encoder apparatus (e.g. at least one of the readhead, a controller and/or an interface unit) can comprise means, for instance a "separation monitor" e.g. electronics and/or software (for instance one or more processing devices), configured to determine a separation signal indicative of the separation between the readhead and scale. The encoder apparatus (for example the readhead) can be configured to determine continuously, as the scale and readhead move relative to each other, a separation signal indicative of the separation between the readhead and scale. Optionally, the encoder apparatus (for example the readhead) can be configured to determine at intervals (regular or irregular) a separation signal indicative of the separation between the readhead and scale.

The position encoder apparatus (e.g. at least one of the readhead, a controller and/or an interface unit) can comprise means, for instance a "separation sensor" or "separation monitor" e.g. electronics and/or software (for instance one or more processing devices), configured to determine said separation signal. The position encoder apparatus (for example the readhead) can be configured to determine continuously, as the scale and readhead move relative to each other, said separation signal. Optionally, the position encoder apparatus (for example the readhead) can be configured to determine at intervals (regular or irregular) said separation signal.

The position encoder apparatus (e.g. the readhead, for instance a "separation monitor") can comprise one or more sensors (one or more separation sensors) via which a separation signal indicative of the separation between the readhead and scale can be determined. Accordingly, the encoder apparatus (for example the readhead) can comprise one or more sensors (one or more separation sensors) via which a separation signal indicative of the separation between the readhead and scale can be determined. Such one or more sensors (one or more separation sensors) can be configured to detect a signal at least one aspect of which (e.g. its position, shape, size, form as it falls on the sensor) is affected by the relative separation of the readhead and scale. Determining a separation signal can comprise providing (said one or more separation sensor/monitor can be configured to provide) an output that is dependent on at least one aspect of the signal falling on the separation monitor sensor.

The encoder apparatus (for example at least one of, the readhead, a controller, and an interface unit) can be configured to determine said separation signal based a scale signal sensed by said at least one scale-signal sensor. Accordingly, in other words, it can be preferred that the signal indicative of the separation between the readhead and scale is determined from the same sensor as that used to determine said at least one position signal indicative of the relative position of the scale and readhead along the scale's measuring direction is generated. Benefits include reduced cost, compactness of readhead, and improved metrological performance. Nevertheless, as will be understood, the separation signal and the position signal could be determined from scale signals sensed by separate/different sensors.

The encoder apparatus could be configured to determine said separation signal, and said at least one position signal, based on the same scale signal sensed by said at least one scale-signal sensor.

The encoder apparatus can be configured to determine said separation signal based on the size of a feature of said scale signal (as it falls on the sensor that detected it, e.g. the at least one scale-signal sensor from which at least one position signal is determined). For instance, the encoder apparatus could be configured to determine said separation signal based on the period size of said scale signal.

The position encoder apparatus can be configured to output a signal (e.g. a "separation signal") indicative of the relative separation of the readhead and scale. The position encoder apparatus can be configured to output said signal indicative of the relative separation of the readhead and scale to (or in a format suitable for) another system/apparatus/processor device and/or configured to output said signal indicative of the relative separation of the readhead and scale to (or in a format suitable) for a user/human (e.g. in the form of a human-sensible signal (e.g. a visual or audible signal)).

As also described above in connection with the first aspect of the invention, the separation signal could be used by the position encoder apparatus. For instance, the separation signal could be used in the compensation of errors in a position signal. For instance, the separation signal could be used in determination of the relative pitch of the scale and readhead.

Embodiments of the invention will now be described, by way of example only, with reference to the following drawings, in which:

Figure 1 is a diagram illustrating a position encoder apparatus according to the present invention;

Figures 2(a) and (b) schematically illustrates the configuration of some of the components of the readhead of Figure 1;

Figure 3 is a diagram depicting the relationship between scale pitch/gradient and measurement error;

Figure 4 illustrates the effect of a change in gradient on the signal received at the readhead;

Figure 5 is a Lissajous representation of the quadrature SIN and COS signals output by the readhead's sensor;

Figure 6 illustrates the effect of a change in gradient on the signal received at the readhead along an undulate scale;

Figure 7 schematically illustrates the functional components of an example readhead and interface unit according to a first embodiment of the invention;

Figure 8 schematically illustrates, according to a first embodiment of the invention, how correction signals from the pitch gradient monitor of the readhead of Figure 7 can be used to correct the readhead's position signals;

Figure 9 schematically illustrates, according to a second embodiment of the invention, how correction signals from the pitch gradient monitor of the readhead of Figure 7 can be used to correct the readhead's position signals;

Figure 10 schematically illustrates the functional components of an example readhead and interface unit according to a second embodiment of the invention;

Figure 11 illustrates, according to an example embodiment of the invention, how correction signals from the pitch gradient monitor of the readhead of Figure 10 can be used by the interface unit to correct the readhead's position signals;

Figure 12 illustrates an example embodiment for determining a pitch (e.g. gradient) compensation signal;

Figure 13 illustrates the mechanism by which a scale pitched at an angle $\alpha$ deflects portions of the optical signal to different portions of the readhead sensor by different amounts;

Figure 14 illustrates an encoder system that exhibits varying magnification with rideheight;

Figure 15 illustrates the distortion effect causing a periodic signal $I(x)$ to have the locations of its maxima and minima shifted with respect to the maxima and minima of the same signal without distortion $I_0(x)$;

Figure 16 schematically illustrates the functional components of an example readhead and interface unit according to a third embodiment of the invention;

Figure 17 schematically illustrates, according to a third embodiment of the invention, how correction signals from the pitch gradient monitor of the readhead of Figure 16 can be used to correct the readhead's position signals.

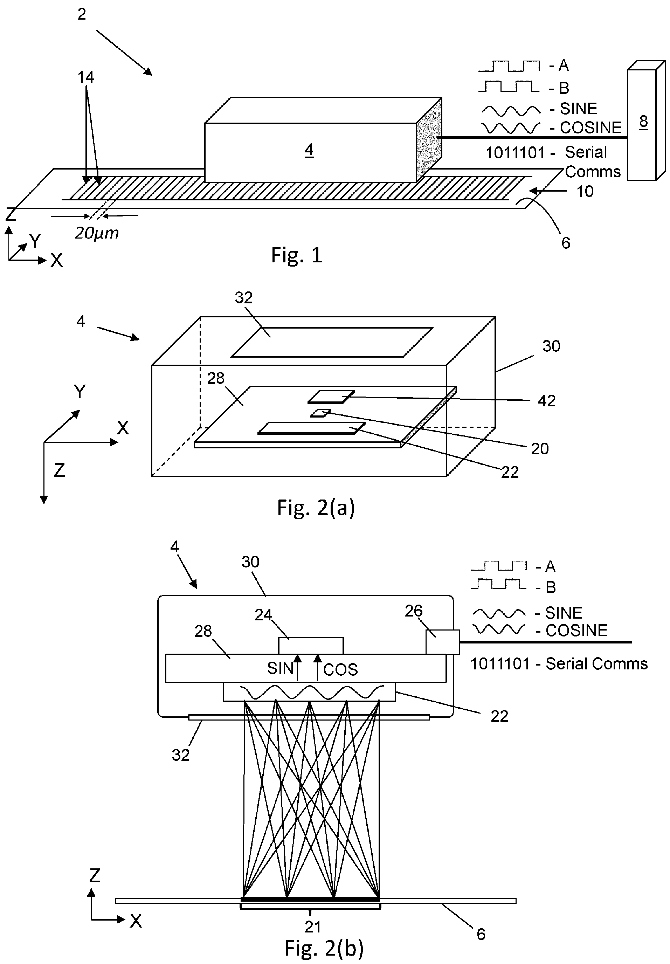

With reference to Figures 1 and 2, there is shown a first example linear position encoder apparatus 2 according to the present invention. As will be understood, the invention is also applicable to rotary scale apparatus, including ring encoders (i.e. edge-read rotary encoders) and disc encoders (i.e. face-read rotary encoders).

The linear encoder apparatus of Figure 1 comprises a readhead 4 and a scale 6.

Although not shown, in use the readhead 4 can be fastened to one part of a machine and the scale 6 to another part of the machine which are linearly movable relative to each other along the X dimension. The readhead 4 is used to measure the relative position/displacement (and/or its derivatives such as velocity and/or acceleration) of itself and the scale 6 along the X dimension, and hence can be used to provide a measure of the relative position/displacement (and/or its derivatives such as velocity and/or acceleration) of the two movable parts of the machine along the X dimension. As will be understood by a person skilled in the art, the relative position of the readhead 4 and scale 6 in the Z and Y dimensions, and the relative pitch (i.e. any relative rotation about an axis parallel to the Y dimension), yaw (i.e. any relative rotation about an axis parallel to the Z dimension) and roll (i.e. any relative rotation about an axis parallel to the X dimension) of the readhead and scale will be constrained by the machine. Of course, there might be some relative displacement in the Z and Y dimensions, and/or some degree of relative pitch, roll and/or yaw of the scale and readhead as the readhead and scale move relative to each other along the X dimension, for instance due to misalignment, non-linearity, or other imperfections in the bearing which constrains the moveable parts of the machine. As will also be understood by a person skilled in the art, and as explained in more detail below, a change in the relative pitch of the readhead 4 and scale 6 could occur due to a change in the scale's gradient along its length, due to undulations in the scale 6.

The readhead 4 communicates with an external device, such as a controller 8, via a wired (as shown) and/or wireless communication channel. The readhead 4 can report the signals from its detectors (described in more detail below) to the controller 8 which then processes them to determine position/displacement information. Additionally or alternatively, the readhead 4 can itself process the signals from its detectors and send position/displacement information to the controller 8.

As illustrated in Figure 1, the signal(s) sent from the readhead 4 to the controller 8 can take many different forms. For example, as is known in the field of position measurement encoders, a readhead can output digital quadrature (A, B) signals, analogue quadrature (SIN, COS) signals, and/or serial data which represents position information.

In another embodiment, an intermediate unit, e.g. an interface unit, can be located between the readhead 4 and the controller 8. The interface unit can facilitate communication between the readhead 4 and controller 8. For example, the interface unit could be configured to process readhead signals and provide position information to the controller 8 (e.g. in the form of digital quadrature (A, B) signals, analogue quadrature (SIN, COS) signals, and/or serial data).

In this embodiment, the position encoder apparatus is an optical, diffraction-based, incremental, position encoder apparatus. Accordingly, the scale 6 comprises an incremental track 10 which comprises a series of periodic scale marks 14 which form a diffraction grating. The incremental track 10 could be what is commonly referred to as an amplitude scale or a phase scale. As will be understood, if it is an amplitude scale then the features are configured to control the amplitude of light transmitted toward the readhead's incremental detector (e.g. by selectively absorbing, scattering and/or reflecting the light), whereas if it is a phase scale then the features are configured to control the phase of light transmitted toward the readhead's incremental detector (e.g. by retarding the phase of the light). In the present embodiment, the incremental track 10 is an amplitude scale, but in either case, as explained in more detail below, the light interacts with the periodic scale marks 14 to generate diffracted orders. In the described embodiment, the period of the periodic scale marks 14 is 20 microns ($\mu$m).

Although not shown, the scale 6 could also comprise one or more reference marks. For instance, the scale could comprise a separate reference mark track comprising a reference mark which defines a reference position. Reference marks can be useful to enable the readhead 4 to locate its absolute position relative to the scale 6 to a unique incremental scale period, from which the incremental position can be counted. As will be understood, there are many ways of providing a reference mark. For example, the reference mark could be embedded within the incremental features (e.g. as described in WO2005/124282). Optionally, the reference mark could be a non-optical feature; for instance it could be a magnetic feature such as described in European Patent EP0826138.

Referring to Figures 2(a) and 2(b), the readhead 4 is shown in more detail. Note that in Figure 2(a) the readhead is shown upside-down compared to the configuration of Figures 1 and 2(b). The readhead 4 comprises a light source 20, a first sensor 22 (hereinafter referred to as the "scale-track sensor 22", a second sensor 42 (hereinafter referred to as the "scale-gradient sensor 42"), a processing device 24, an input/output unit 26, a printed circuit board (PCB) 28, and a housing 30. As will be understood, references herein to "processing device/unit" includes a bespoke processing device/unit configured for the specific application (e.g. a field programmable gate array "FPGA") as well as a more generic processing device/unit which can be programmed (e.g. via software) in accordance with the needs of the application in which it is used. Accordingly, suitable processing devices/units include, for example, a CPU (Central Processor Unit), FPGA (Field Programmable Gate Array), or ASIC (Application Specific Integrated Circuit), or the like.

Light emitted by the light source 20 passes through a window 32 in the housing 30 and illuminates an area on the scale 6. Light is reflected by the periodic scale marks 14 and forms a pattern on the scale-track sensor 22. As will be understood, the pattern could be formed in different ways, e.g. via diffraction (e.g. forming a Talbot image) or via shadow-casting of the scale pattern. The pattern formed on the scale-track sensor could be a fringe pattern. The pattern changes (e.g. it moves) with relative movement of the readhead 4 and scale 6 along the X dimension (the measurement dimension). Such changes of the pattern is monitored by the processing device 24 so as to maintain a count of the relative position of the readhead 4 and scale 6.

The illuminated area on the scale 6 from which light is reflected and diffracted so as to form the pattern on the scale-track sensor 22, could be referred to as the scale-track sensor's "reading footprint" (schematically highlighted as region 21 in Figure 2(b)). As will be understood, the actual area on the scale 6 that is illuminated by the light source 20 can be bigger than the scale-track sensor's "reading footprint" 21, but rays falling on the scale 6 outside the scale-track sensor's reading footprint 21 will not contribute to the pattern detected by the scale-track sensor 22 (e.g. because they are reflected and diffracted to locations beyond the scope of the scale-track sensor 22).

In the embodiment described, the scale-track sensor 22 outputs analogue quadrature SIN and COS signals. As will be understood by a person skilled in the art, the SIN and COS signals vary in amplitude with relative movement of the scale 6 and readhead 4, and the cycling of these signals can be used to keep a count of the relative location of the scale 6 and readhead 4. In the particular embodiment described, the scale-track sensor 22 comprises an array of photodiodes. In particular, as will be understood by a person skilled in the art, in embodiments in which a pattern is produced at the scale-track sensor 22, the scale-track sensor 22 can be in the form of a so-called "electro-grating", which in other words is a photo-sensor array which comprises two or more (e.g. four) sets of interdigitated/interlaced photo-sensitive sensors, each set detecting a different phase of the fringe. Such electro-gratings are known in the field of position measurement encoders, and are described in more detail in US Patents US5861953, US8525102 and US9952068.

In the embodiment described, the light source 20 emits electromagnetic radiation (EMR) in the infra-red range, however, as will be understood by a person skilled in the art, this need not necessarily be the case and the light source could emit EMR in other ranges, for example anywhere in the infra-red to the ultra-violet range. As will be understood, the choice of a suitable wavelength for the light source 20 can depend on many factors, including the availability of suitable gratings and detectors that work at the EMR wavelength.

As mentioned above, a position encoder device can be sensitive to pitch-induced error whereby a relative pitching of the readhead 4 and scale 6, will cause the fringe field to displace along the scale-track sensor 22. Accordingly, both: i) relative motion of the scale 6 and readhead 4 along the X dimension; and ii) relative pitching of the readhead 4 and scale 6 will cause the fringe field to displace along the scale-track sensor 22. Accordingly, in the absence of the invention, relative pitching of the scale 6 will be incorrectly interpreted and reported by the encoder apparatus as relative motion along the X dimension. As mentioned above, and as explained in more detail below, such relative pitching of the readhead 4 and scale 6 can be caused by a change in the scale's gradient along its length, e.g. due to scale undulations.

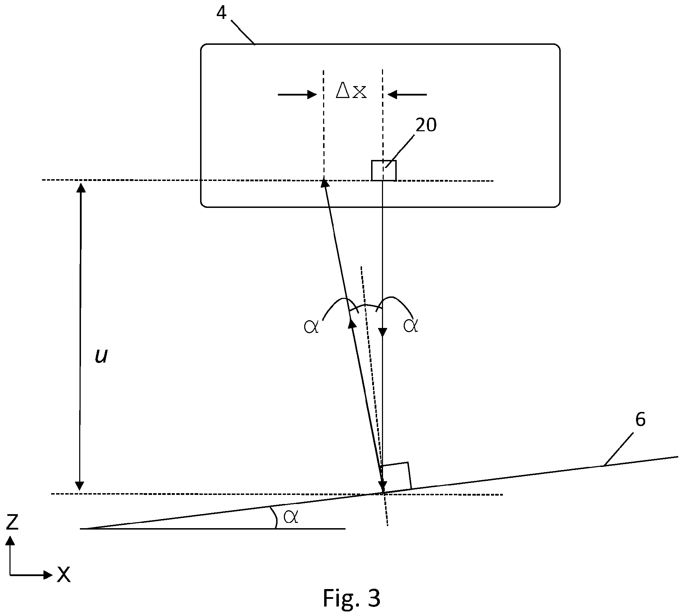

The relationship between scale pitch/gradient and measurement error is explained with reference to Figure 3. If the part of the scale located within the readhead's reading footprint 21 is pitched by an angle $\alpha$, then a ray emitted by the source normal to the readhead is reflected back at an angle $2\alpha$ and is displaced in the sensor plane by a distance:

$$\Delta x = u \tan 2\alpha \qquad (1)$$

The actual metrology/position error $\Delta e$ (i.e. the magnitude of the position error along the X dimension) caused by the scale pitch/gradient is dependent on the magnification M of the optical system, and so can be determined from $\Delta x$ by the following:

$$\Delta e = \frac{\Delta x}{M} \qquad (2)$$

Accordingly, a change in the gradient of the scale 6 at the scale-track sensor's reading footprint 21 will adversely affect the pattern falling on the scale-track sensor 22. For instance, a change in the gradient of the scale at the scale-track sensor's reading footprint 21 (as the readhead 4 and scale 6 move relative to each other) can affect the position of the pattern falling on the scale-track sensor 22, which, in the absence of the present invention, causes the subsequent processing of the pattern to infer that either more, or less, (depending on the direction of the gradient) relative motion along the X dimension has taken place than actually has, thereby leading to a pitch-induced measurement error. As will be understood, even for relatively modest gradient angles $\alpha$, this has the potential to induce significant metrology errors (e.g. $\alpha = 0.1°$, u = 3mm gives $\Delta e = 5\mu m$, assuming M=2).

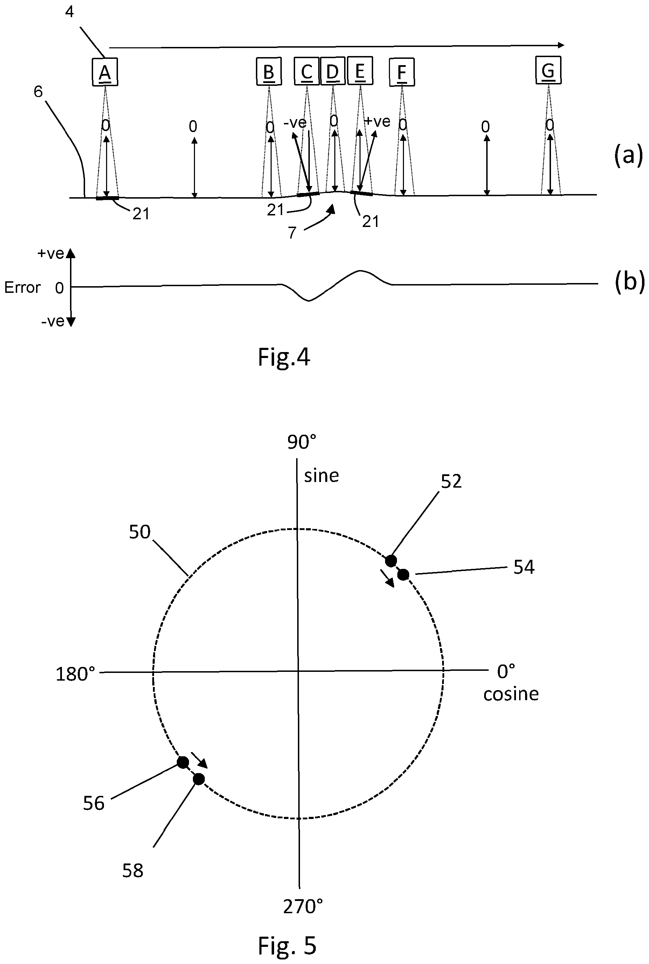

For instance, as shown, in Figure 4(a), the scale 6 has a substantially constant gradient along most of its length, but there is a region 7 where there is a small lump in the scale 6 which causes the gradient of the scale to change, which effectively causes a change in the relative pitch of the scale 6 and readhead 4 at the point of measurement/reading footprint 21 and so in turn causes a shift in the fringe formed at the scale-track sensor 22 as the readhead 4 passes over the lump 7. Accordingly, taking the gradient of the scale at position A of the readhead as the reference or datum gradient, as the readhead 4 travels from left to right from position A towards position B, there is zero (0) position shifting effect on the fringe formed at the detector, and hence there is zero position measurement error which is attributable to the gradient of the scale. However, between positions B and F, the gradient of the scale 6 (and so the relative pitch of the scale 6 and readhead 4) varies and this has a position shifting effect on the fringe formed at the scale-track sensor 22.

For example, as shown at position C, there is a relative incline in the scale gradient, and at position E there is a relative decline in the scale gradient. As illustrated in Figures 4(a) and (b), a relative incline (relative to the direction of travel) has a negative (-ve) position shifting effect on the pattern falling on the scale-track sensor 22, which leads to a negative position error in the position signal reported to and used by a controller 8 (in the absence of the invention).

For instance, referring to Figure 5, a Lissajous figure of the analogue quadrature SIN and COS signals output by the readhead's scale-track sensor 22 is shown. The dashed circle 50 schematically illustrates the ideal Lissajous shape produced by the SIN and COS signals as the readhead 4 and scale 6 move relative to each other. Spot 52 schematically illustrates the expected relative amplitudes of the SIN and COS signals when the readhead is at location at location C of the readhead, and spot 54 schematically illustrates the actual relative amplitudes of the SIN and COS signals when the readhead is at location C of the readhead. As shown, the spot 54 is slightly retarded/behind where it is expected to be (had there been no change in scale gradient at location C) because of the positional shift of the pattern caused by the change in gradient.

As illustrated in Figures 4(a) and (b), a decline in the scale's gradient (relative to the direction of travel) has a positive (+ve) position shifting effect on the pattern falling on the scale-track sensor 22, which thereby causes the position of the pattern on the scale-track sensor 22 to be shifted forward, and in turn leads to a positive position error in the position signal reported to and used by a controller 8 (in the absence of the invention). Referring to Figure 5 again, spot 56 schematically illustrates the expected relative amplitudes of the SIN and COS signals when the readhead is at location E of the readhead, and spot 58 schematically illustrates the actual relative amplitudes of the SIN and COS signals when the readhead is at location E of the readhead. However, because of the phase shift of the pattern caused by the change in gradient (in other words, caused by the change in the relative pitch of the scale and readhead), the Lissajous curve is slightly advanced/ahead of where it is expected to be (had there been no decline in the scale gradient at location E). As will be understood, for the sake of clarity of illustration the spots 54, 56 are shown as being located in opposite Lissajous quadrants, but this need not necessarily be the case (each spot could be in any Lissajous quadrant).

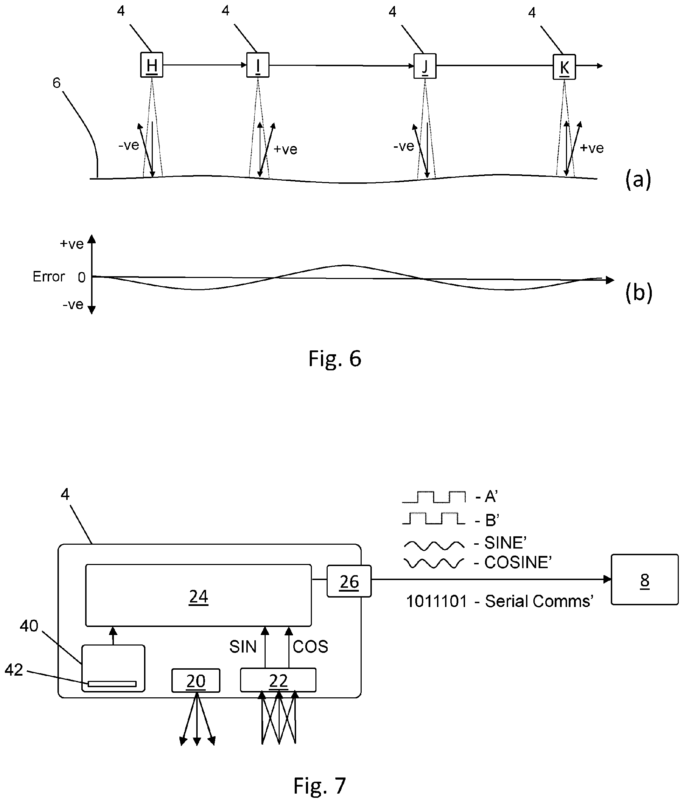

Figure 6 illustrates that this is not only a problem on an isolated lump or dip on a generally flat scale, but that this is also a problem on scales which are undulated.

For instance, at positions H and J there is a relative incline in the scale gradient (relative to the direction of travel) which has a negative (-ve) position shifting effect on the pattern falling on the scale-track sensor 22, and at positions I and K there is a relative decline in the scale gradient (relative to the direction of travel) which has a positive (+ve) position shifting effect on the pattern.

The present invention overcomes the errors caused by changes in the relative pitch of the scale and readhead, e.g. caused by scale gradient changes, by continuously monitoring for at least one indication of a change in the relative pitch of the scale and readhead (e.g, by continuously monitoring for at least one indication of a change in the scale's gradient) at the scale-track sensor's reading footprint 21 and, in response to an indication of such a change, compensating dynamically for such a change, so as to reduce scale gradient induced measurement error, and/or providing an output which is indicative of the scale gradient/relative pitch of the scale and readhead.

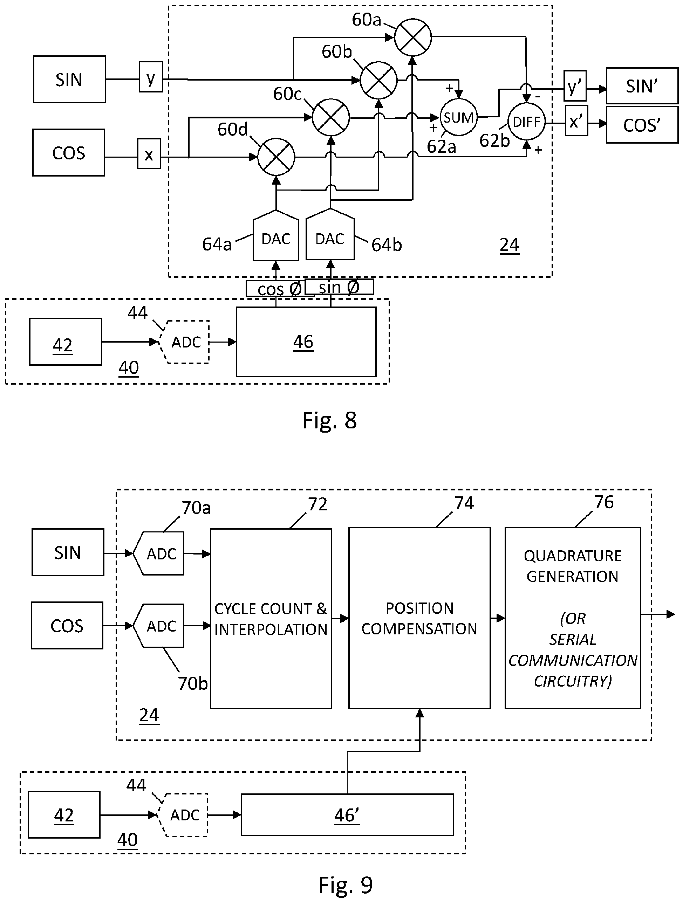

Figure 7 illustrates one embodiment of a readhead 4 configured in accordance with the invention. As shown, the readhead 4 comprises a pitch monitor 40 (e.g. a "scale-gradient monitor"), which comprises a pitch sensor 42 (e.g. a "scale-gradient sensor"), and which is configured (as explained in more detail in connection with Figures 8 and 9) to determine and provide based on the output of the pitch sensor 42, at least one signal which can be used to correct the position determined from the first (scale pattern) sensor 22. For instance, the at least one signal output by the pitch monitor could comprise the measurement of the relative pitch (e.g. gradient) of the scale and readhead at the readhead's reading footprint 21, and/or a pitch (e.g. gradient) correction/compensation signal which can be directly used by the processing device 24 to correct the position, e.g. position signal(s), determined from the first (scale pattern) sensor 22.

In the embodiment of Figure 7, the readhead's processing device 24 receives analogue SIN and COS quadrature signals from the scale-track sensor 22 and, based on those signals, is configured to output position signals which are indicative of the relative position of the readhead 4 and scale (not shown in Figure 7) to an external device such as a controller 8. As shown in Figure 7, such output signals can be in one or various different formats, e.g. the output signals can be analogue SIN and COS quadrature signals, digital quadrature signals or digital serial data. In accordance with the invention, in this embodiment the processing device 24 is configured to receive a pitch (e.g. gradient) compensation signal from the pitch (e.g. scale-gradient) monitor 40 and is configured to use it to compensate for any errors caused by a change in the relative pitch of the readhead and scale (e.g. caused by a change in the gradient of the scale), so as to reduce pitch-(e.g. scale gradient-) induced measurement error in the signal output by the readhead 4 to the controller 8. Further details of how the processing device 24 could use the pitch (e.g. gradient) compensation signal from the pitch (e.g. scale-gradient) monitor 40 to compensate for any errors caused by a change in the relative pitch of (e.g. a change the in gradient of) the scale 6 and readhead 4 will now be explained in more detail below with reference to Figures 8 and 9.

In the embodiment of Figure 8, the processing device 24 is configured to output corrected analogue quadrature SIN and COS signals. In this embodiment, this is achieved by moving the analogue SIN and COS signals forward (in other words to "advance" the analogue SIN and COS signals) or backwards (in other words to "retard" the analogue SIN and COS signals) along the sinewaves. This is equivalent to rotating the above mentioned Lissajous figure counter-clockwise or clockwise by the amount of compensation needed. Such rotation can be achieved by the analogue multipliers 60a - 60d and summing amplifiers 62a and 62b which are configured to implement the following equations:

$$COS(rotated) = [COS(input) \times COS\ (rotation\ angle)] - \qquad (4)$$

$$[SIN(input) \times SIN(rotation\ angle)]$$

$$SIN\ (rotated) = [COS(input) \times SIN(rotation\ angle)] + \qquad (5)$$

$$[SIN(input) \times COS(rotation\ angle)]$$

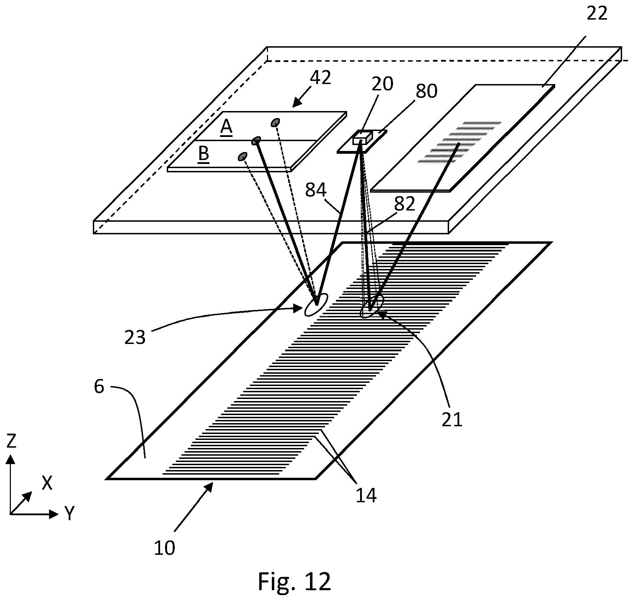

The rotation angles are generated by the pitch monitor 40. In particular, in this embodiment, the pitch gradient monitor 40 comprises a pitch sensor 42 which outputs a signal which is dependent on the relative pitch of the scale and readhead (e.g. by measuring the gradient of the scale) at the readhead's reading footprint 21 (examples of which are explained in more detail below in connection with Figures 12 to 15). Optionally, if required, an Analogue to Digital Converter (ADC) 44 can be provided to convert the pitch sensor 42 output to a digital signal. In this embodiment, the pitch monitor 40 comprises an additional processing device 46 which is configured to convert the output of the pitch sensor 42 into signal(s) which can be directly used by the readhead's processing device 24. In this embodiment, the pitch monitor's 40 processing device 46 uses a vector rotation lookup table 46 to supply cos Ø and sin Ø rotation angles to the processing device 24 based on the output of the pitch sensor 42. The processing device 24 receives the cos Ø and sin Ø rotation angles and converts them, via Digital to Analogue Converters (DACs) 64a, 64b, into analogue signals for use by the analogue multipliers 60a-60d, which implement the above equations to compensate for the effect of the change in the relative pitch of the scale and readhead.

The embodiment of Figure 9 is similar to the embodiment of Figure 8 in that the readhead's processing device 24 receives analogue SIN and COS quadrature signals from the scale-track sensor 22. However, in this embodiment, the readhead and processing device 24 are configured not to output analogue quadrature SIN and COS signals, but rather are configured to output digital quadrature (A, B) position signals. In this embodiment, the processing device 24 comprises ADCs 70a, 70b for converting the analogue SIN and COS signals from the scale-track sensor 22 into digital values, which are then supplied to a cycle count and interpolation unit 72. The cycle count and interpolation unit 72 uses the outputs of the ADCs 70a, 70b to keep a count of the relative position of the readhead and scale. Relative position of the scale and readhead to a degree finer than the period of the scale features (to a fraction of a cycle count) can be established by interpolation. Together, the cycle count and interpolated value can be combined to provide a position value which is supplied to the position compensation unit 74.

The position compensation unit 74 takes the position value from the cycle count and interpolation unit 72 and also takes a compensation value from the pitch monitor 40 to determine, if, and by how much, to advance or retard the position value so as to compensate for any variation in the relative pitch of the scale and readhead at the readhead's reading footprint 21. Similar to the embodiment of Figure 8, the pitch monitor 40 comprises a pitch 42 which outputs a signal dependent on the relative pitch of the scale and readhead. If required, an Analogue to Digital Converter (ADC) 44 can be provided to convert the pitch 42 output to a digital signal. In this embodiment, the pitch monitor 40 comprises an additional processing device 46' which comprises a position compensation value lookup table which is used to determine the appropriate compensation value to the processing device 24, based on the output of the pitch sensor 42, and which is used by the position compensation unit 74 to advance or retard the position value so as to compensate for any variation in the scale's gradient at the readhead's reading footprint 21. The compensated position value is then supplied to a quadrature generation unit 76 which is configured to generate and output digital quadrature (A, B) signals based on the compensated position value.

As noted in Figure 9, in an alternative embodiment, rather than producing digital quadrature signals from the compensated position value supplied by the position compensation unit 74, the unit 76 could be configured to produce serial data for sending over a serial communications link. Alternatively, the unit 76 could be configured to convert the compensated position signals received from the position compensation unit 74 into analogue quadrature (SIN, COS) signals, e.g. via a DAC.

The embodiments of Figures 8 and 9 rely on a supplemental processing device 46 separate to the readhead's main processing device 24 to determine a gradient correction signal, which is then supplied to the main processing device 24.

However, this need not necessarily be the case. For instance, the readhead 4 could be configured such that the main processing device 24 receives the raw output from the pitch sensor 42 and is configured to determine how to compensate the position signal(s) based on the raw output from the pitch sensor 42.

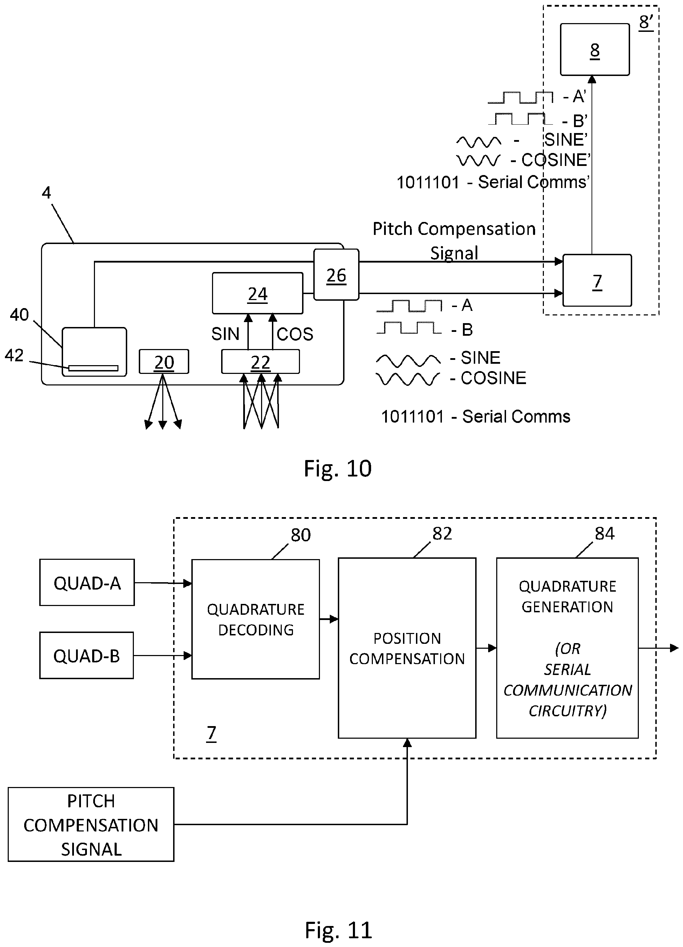

Referring now to Figure 10, another embodiment of the invention is shown. In contrast to the embodiment of Figure 7, the encoder apparatus of Figure 10 is configured such that the readhead's processing device 24 does not receive the pitch compensation signal from the pitch monitor 40. Instead, the readhead's processing device 24 and the readhead 4 itself, outputs non-compensated position signals (e.g. which can be in the form of digital quadrature signals, analogue sine and cosine signals, or serial data) to an external device. The raw output of the pitch sensor 42, and/or the pitch compensation signal derived therefrom, is also output to the external device, which uses the raw output of the pitch sensor 42 (and/or the pitch compensation signal, whichever is supplied) to correct the position signals it receives from the readhead 4. In particular, in this embodiment, the position signal and the raw output of the pitch sensor 42 (and/or the pitch compensation signal, whichever is supplied) can be passed to an interface 7 which is configured to use the raw output of the pitch sensor 42 (and/or the pitch compensation signal, whichever is supplied) to compensate the position signal for any error caused by a change in the relative pitch of the scale and readhead, so as to thereby reduce pitch-induced measurement error in the position signal passed to the controller 8.

As illustrated in Figure 10, the format of the position signal output by the interface 7 to the controller 8 can be the same as the same format it receives from the readhead 4, or it could be configured to convert the position signal to a different format. As also illustrated in Figure 10, the interface 7 could be part of a controller apparatus 8' which incorporates the interface 7 and the controller 8.

Figure 11 schematically illustrates how the interface 7 of apparatus of Figure 10 could be configured. For instance, in an embodiment in which the readhead 4 provides digital quadrature A, B signals, the interface 7 could comprise a quadrature decoding unit 80 which generates a position value from the digital quadrature A, B signals. The position value is passed to a position compensation unit 82 which also receives the pitch compensation signal from the readhead 4, and uses the pitch compensation signal to compensate the position value for any error caused by a change in the relative pitch of the readhead and the scale (e.g. due to a change in the gradient of the scale). The compensated position value is then supplied to a quadrature generation unit 84 which is configured to generate and output digital quadrature (A, B) signals based on the compensated position value. As noted in Figure 11, in an alternative embodiment, rather than producing digital quadrature signals from the compensated position value supplied by the position compensation unit 82, the unit 84 could be configured to produce serial data for sending over a serial communications link. Alternatively, the unit 84 could be configured to convert the compensated position values received from the position compensation unit 82 into analogue quadrature (SIN, COS) signals.

In the embodiment of Figures 10 and 11, the pitch monitor 40 is configured to determine the pitch compensation signal and pass this to the interface unit 7. As will be understood, this need not necessarily be the case, and for instance, the pitch monitor 40 could merely output the raw signal from the pitch sensor 42 and the interface unit 7 could be configured to determine the pitch compensation signal itself.

Optionally, in an alternative embodiment, the interface 7 is omitted and the controller 8 itself can be configured to receive non-compensated position signals as well as the raw output of the pitch sensor 42 (and/or the pitch compensation signal, whichever is supplied), and therefrom determine a corrected position signal.

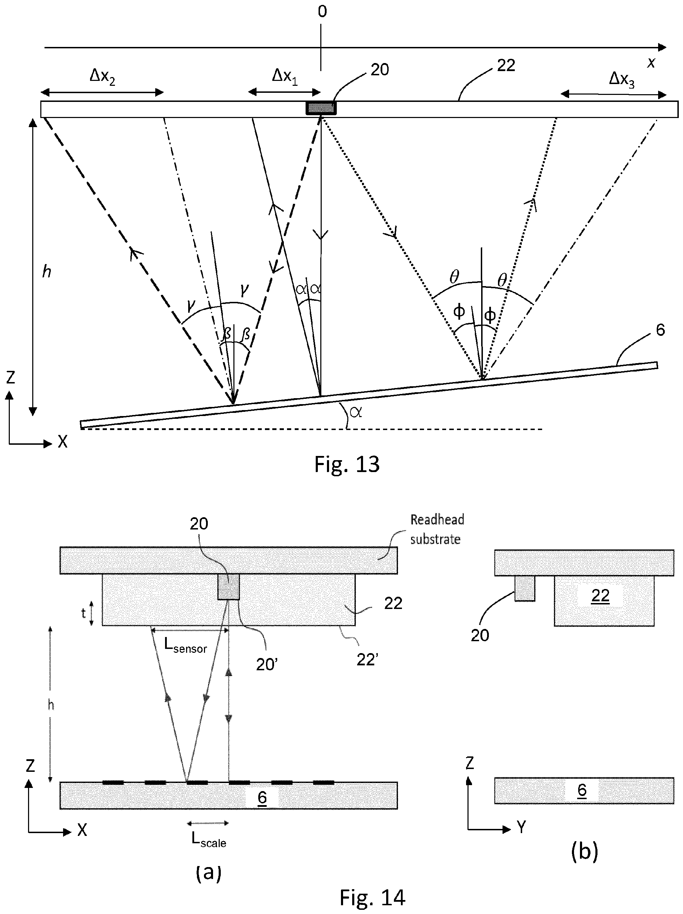

As will be understood by a person skilled in the art, the pitch sensor 42 could measure the relative pitch of the scale and readhead at/within readhead's reading footprint 21 (e.g. as per the embodiment of Figures 13 and 14 described below).

Alternatively, the pitch sensor 42 could measure the relative pitch of the scale and readhead at a point outside the readhead's reading footprint, from which the relative pitch at the readhead's reading footprint can be determined/assumed. For instance, as per the embodiment of Figure 12 described below the pitch sensor 42 could measure the relative pitch of the scale and readhead at at least one point which is coincident along the measurement dimension (i.e. along the X-dimension), but offset in a direction perpendicular to the measurement direction (i.e. along the Y dimension). In another alternative embodiment, the pitch sensor 42 could be configured to measure the relative pitch of the scale and readhead at at least one point before and/or after the readhead's reading footprint, from which the relative pitch of the scale and readhead at the readhead's reading footprint can be determined.

As will be understood, the above-described configurations for correcting the readhead's position signals shown in and described above in connection with Figures 7 to 11 could be adapted for an absolute position encoder/readhead. As will be understood, an absolute position encoder apparatus is one having a scale (provided by one or more scale tracks) having features that encode a series of unique positions along the length of the scale, which enables the encoder apparatus to determine the absolute position of the scale and readhead on start-up/without requiring relative movement of the scale and readhead; c.f. an incremental encoder apparatus which requires relative movement, e.g. to a reference mark.

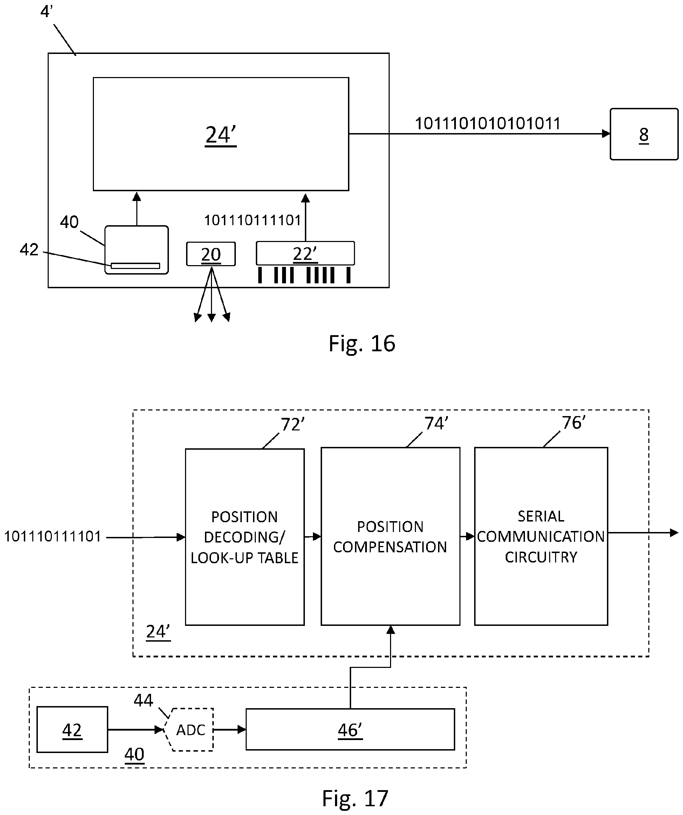

For example, with regard to Figures 16 and 17, in an absolute system, the absolute encoder readhead 4'/its processor 24' can be configured to output serial data (e.g. code words) indicating the absolute position of the scale 2 and readhead 4', instead of a cycle count. Accordingly, a processor unit 72' could be configured to receive and decode an absolute codeword detected by the sensor 22', and to look up and determine an absolute position based on the decoded signal (e.g. an example technique for which is described in WO2010/139964). As will be understood, in addition to simply decoding the codeword falling on the sensor, the processor unit 72' can also fine-tune the determined position, for example based on the codeword's position on the sensor (e.g. how far along the sensor the codeword was at the point the codeword was read). Especially in those embodiments in which the absolute scale has absolute position embedded within it by omitting select scale lines from what is otherwise a periodic arrangement of scale lines, such as that described in WO2002/084223, the fine-tuned position can include, for instance, scale-phase position information. As will be understood, scale-phase position information can specify where the readhead/sensor is relative to the scale as a subdivision of the (e.g. nominal) scale period. For example, a scale-phase position information could comprise the position of the scale features as detected by the readhead's sensor relative to a predetermined point on the sensor. This could be determined by looking at the phase offset between the signal output by the readhead's sensor and a predetermined reference signal (e.g. as described in more detail in US2012/0072169). In an alternative embodiment (and in line with what is described in US2012/0072169), the absolute position can be determined from: i) a coarse position extrapolated from previous determined position(s); and ii) a fine/phase position information determined/extracted from the current scale reading. Either way, the absolute position can be compensated for by the position compensation unit 74' in accordance with a compensation value from the pitch monitor 40, similar to the above-described embodiments. Optionally, in those embodiments in which scale-phase position information is determined from the signal falling on the sensor, the step of compensating the absolute position can comprise manipulating the scale-phase position information (e.g. either before or after it has been combined with the coarse position represented by the codeword).

The compensated position measurement can then be output by the serial communication circuity 76'.

Figure 12 shows a first example embodiment for determining a pitch (e.g. gradient) compensation signal. In this embodiment a beam steerer 80 is located in front of the light source 20, such that light emitted by the light source 20 is split into first and second beams, the central rays 82, 84 of which are shown in bold in Figure 12. Light in the first beam is reflected and diffracted by the incremental features 14 in the incremental track 10 and forms a pattern (e.g. fringe field) on the scale-track sensor 22; the scale-track sensor's reading footprint 21 on the scale 6 is schematically illustrated in Figure 12. Light in the second beam falls on a mirror-like surface of the scale 6 adjacent the incremental track 10, and is thereby reflected back onto a split detector 42, which is shown in Figure 12 as having two halves A, B. The footprint 23 of the second beam on the scale 6 is schematically illustrated in Figure 12. In the embodiment shown, the footprint of the second beam falls on the scale 6 at a position which is laterally offset (i.e. offset in the Y-dimension relative to the scale-track sensor's reading footprint 21) but falls on the scale 6 at substantially the same position along the scale's measurement dimension (i.e. in the X-dimension) as the scale-track sensor's reading footprint 21.

The relative pitch of the scale 6 and readhead 4 (e.g. the gradient of the scale 6 at the point the second beam falls on the scale 6) will affect the angle of reflection back toward the split detector 42, and hence will affect the position the reflected second beam falls on the split detector 42. Accordingly, the outputs of the two halves A, B of the split detector 42 can be used to determine the relative pitch of the scale 6 and readhead 4 (e.g. the gradient of the scale 6 at the point of measurement). For instance, in one theoretical setup as shown in Figure 12, the outputs of A and B of the split detector 42 can be equal when the scale's gradient relative the horizontal (X-Y) plane is 0°, but the output of A or B will increase relative to the other when the scale gradient changes. For instance, a signal that is linearly proportional to the position of the spot falling on the split detector 42 can be determined as follows:

$$S = \frac{A-B}{A+B} \qquad\qquad (7)$$

In the embodiment described, the split detector's 42 output S is directly linked to $\Delta x$ and so the split detector's 42 output S can be used to determine the error caused by a change in the relative pitch of the readhead and scale (e.g. a change in the gradient of the scale) and/or can be used to determine a pitch (e.g. gradient) compensation signal, for example as described above in connection with Figures 7 to 11. As will be understood, the relationship between S and $\Delta x$ will be dependent on the configuration of the split detector, but can easily be determined via calibration or from the split detector manufacturer specification. Accordingly, in connection with the embodiment of Figure 8 for instance, S (or $\Delta x$ derived therefrom) can be used by the pitch monitor's processor 46 to determine appropriate cos Ø and sin Ø rotation angles for passing to the processing device 24. In the embodiment described, the relationship between S and $\Delta x$ is constant regardless of rideheight (the distance between readhead and the scale in the Z dimension) and so the rideheight does not need to be known or assumed to determine $\Delta x$ from S. If the configuration of the encoder is such that the relationship between S and $\Delta x$ changes with rideheight, then as described below in connection with the embodiment of Figure 13, the rideheight can be assumed, or could be determined/measured, and factored into the $\Delta x$ from S.

As will be understood, as an alternative to the one-dimensional split detector 42 of Figure 12, a two-dimensional split detector could be used.

The above-described split detector 42 requires a finite-width spot that straddles the two detectors A, B, in order to allow signal S to be produced that is linearly proportional to pitch error. However, as will be understood, the split detector 'stops working' effectively when the spot is exclusively on A or B. Other types of optical position sensors (OPSs) and position-sensitive devices (PSDs) (e.g. a position-sensitive photodiode) that have the ability to return a continuously variable signal that is linear with offset across the full width of the device's active area are well known.

Furthermore, in another embodiment, it may not be necessary to provide separate sensors for determining the relative pitch/scale gradient and the relative position of the readhead 4 and scale 6 along the measurement direction x. For example, a one- or two-dimensional sensor array such as a charge-coupled device (CCD) or complementary metal-oxide semiconductor (CMOS) sensor could be used, the output of which could be analysed to determine both the relative pitch/scale gradient and the relative position of the readhead 4 and scale 6 along the measurement direction x.

As will be understood (and with reference to the description above to an absolute encoder systems in connection with Figures 7 and 9), the embodiment described above in connection with Figure 12 is equally applicable to pitch-sensitive absolute position encoder apparatus (e.g. a shadow-cast absolute encoder apparatus) as it is to incremental position encoder apparatus.

A second example embodiment for determining a gradient compensation signal will now be described with reference to Figures 13 to 15. It has been identified that in addition to a change in the gradient of the scale causing the above-described position-displacement error, a more subtle effect is present in that the form of the optical signal is also distorted/deformed as a result of a change in the relative pitch of the scale and readhead (e.g. due to a change in the gradient of the scale). This is illustrated in Figure 13. The solid, dashed, and dotted rays represent portions of the optical signal hitting a point directly below, at an oblique angle to the left of, and at an oblique angle to the right of, the readhead light source respectively, and their reflected path. The dash-and-dotted lines represent the corresponding reflected ray paths on level scale. Figure 13 shows that scale gradient/pitch deflects the central ray (solid) by an amount $\Delta x_1$, which corresponds to the bulk displacement $\Delta x$ of the optical signal as per the underlying pitch error mechanism described above in connection with Figure 3. It is apparent from Figure 13, meanwhile, that the oblique rays (the dashed and the dotted rays) are deflected by amounts $\Delta x_2$, $\Delta x_3$ that are greater than $\Delta x_1$. Thus the optical signal is distorted/deformed as well as being deflected.

Furthermore, the magnitude of this distortion/deformation effect is dependent on the degree of scale gradient/relative pitch. It has been found that the distortion/ deformation "D" depends continuously on the position along the sensor "$x$", scale gradient/pitch $\alpha$ and readhead rideheight $h$, and takes the form:

$$D(x,\alpha,h)=F_1(h)\alpha x^2+F_2(h)\alpha \qquad (8)$$

$F_1(h),F_2(h)$ are known, different scaling constants, that depend on the rideheight/separation between the sensor and scale "$h$" and readhead geometry.

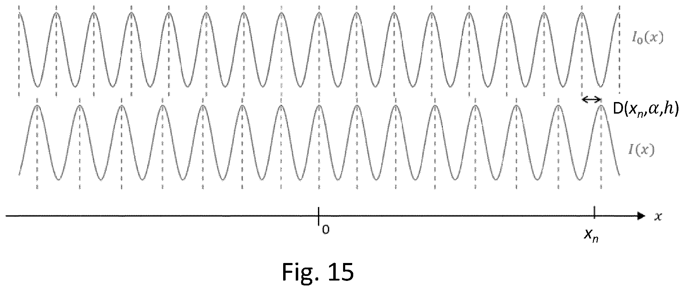

How $F_1(h),F_2(h)$ can be established will now be explained with reference to Figures 14 and 15. Figure 14 schematically illustrates an example system configuration, wherein the scale-track sensor's 22 sensing surface 22' and the light source's 20 emission surface 20' are deliberately not located in the same plane. The distance from the scale-track sensor's 22 sensing surface 22' to the scale is $h$, and the vertical offset between the sensing surface 22' and the emission surface 20' is $t$. $t$ is known from manufacture/design of the readhead. For positive $t$, the sensing surface 22' is closer to the scale than the emission surface 20', and for negative $t$, the sensing surface 22' is further from the scale than the emission surface 20'. For the case $t = 0$, the sensing surface 22' and the emission surface 20' are coplanar.

In the embodiment described $F_1(h),F_2(h)$ take the following form:

$$F_1(h) = \frac{4h+t}{(2h+t)^2} \qquad (9)$$

$$F_2(h) = -2h \qquad (10)$$

These expressions hold true without loss of generality whether t>0, t=0 or t<0. Thus the distortion scaling constants depend on two factors: $t$ and $h$.

A typical encoder will have a nominal rideheight $h_0$ (i.e. distance from a datum feature of the readhead to the surface of the scale) specified, but will additionally be capable of correct operation within a specified tolerance window of rideheight range $\Delta h$.

The value of $h$ could be assumed. For example, it could be assumed that the readhead is operating at its nominal rideheight such that $h=h_0$. In which case, the subsequent pitch corrective factor might be imperfect, due to any discrepancy between the true $h$ and $h_0$. This strategy may be acceptable for lower performance encoder systems, and/or for instance where a simplified computational workload is preferred, and/or when the operating rideheight range $\Delta h$ is relatively small.

Optionally, the true, current value for $h$ could be determined and can be used to calculate values for $F_1(h),F_2(h)$. In this case more computation is required but the resultant pitch compensation signal will take into account any deviation of $h$

from $h_0$.

An example scheme for determining $h$ in this manner is described in connection with Figure 14(a). (As will be understood, there are alternative approaches for independently determining $h$, for example by the addition of an extra encoder, or an alternative height measurement device). For the encoder shown in Figure 14(a), the size $L_{\text{scale}}$ of a scale feature (for instance, the repeating period of the scale, or the size of a typical aperiodic feature) relates to the corresponding size $L_{\text{sensor}}$ of the feature image on the sensor as follows:

$$L_{\text{sensor}} = M\,L_{\text{scale}} \qquad (11)$$

The magnification $M$ is determined by the system geometry as follows:

$$M = \frac{2h+t}{h+t} \qquad (12)$$

Figure 14 illustrates the case that $t > 0$ (where the sensing surface 22' is closer to the scale than the emission surface 20'), but the above expression for M holds true equally for $t < 0$ (representing the emission surface 20' is closer to the scale than the sensing surface 22').

The vertical offset $t$ is known (from readhead design/manufacture) and M can be determined via analysis of the detector signal, for instance by frequency-domain analysis of the periodic or quasi-periodic structure. For example, M can be determined by decomposing the spatially resolved detector signal into a corresponding summation of periodic signals, such as sine waves, of different frequencies, via techniques known to a person skilled in the art such as a Fourier transform. M would thus be determined by identifying the frequency component with the largest amplitude within a suitable range. Accordingly, $h$ can be determined by rearranging equation 12 as follows:

$$h = \frac{M-1}{2-M}\,t \qquad (13)$$

Now that $h$ is known, $F_1(h)$, $F_2(h)$ can be determined via equations 9 and 10.

In the embodiment described, the measurement of $\underline{h}$ is factored into the pitch compensation. However, in another embodiment, this need not necessarily be the case. For example, the apparatus could be configured to determine the separation/rideheight "h" and use it/output it in isolation. For example, the separation/rideheight measurement could simply be output for information (e.g. to be used during an installation stage). Indeed, according to another embodiment, no pitch compensation/calculation takes place at all. Accordingly, the apparatus could be configured to determine a position measurement (along the measurement axis) and a separation/rideheight measurement.

In the embodiment described, the local distortion D($x,\alpha,h$) across the extent of the sensor is measured in order to determine the scale-gradient/pitch angle $\alpha$. In the embodiment described, the sensor is a one-dimensional sensor array of pixels yielding an electric signal proportional to the light falling on each pixel. In the embodiment described, the signal the signal falling on the sensor has at least some periodic content within it, e.g. due to the periodicity of the incremental scale design, or by an aperiodic absolute scale with an embedded periodic structure (e.g. such as that described in WO2002/084223). For such a signal, the periodic structure contributes regularly spaced maxima and minima, and the distortion effect causes the locations of these maxima and minima to be shifted by a varying amount D($x,\alpha,h$) across the width of the sensor, as shown in Figure 15. Accordingly, this embodiment is applicable to both incremental scale and absolute scale that has at least some periodic content (e.g. absolute scale that has absolute position embedded within it by omitting select scale lines from what is otherwise a periodic arrangement of scale lines, such as that described in WO2002/084223).

In the embodiment described, the distortion D($x,\alpha,h$), is determined by measuring the shifting of the maxima and minima of the periodic structure across the extent of the sensor. One way of achieving this is to carry out a single-point discrete Fourier transform of a windowed portion of $I(x)$, evaluated at a spatial frequency $1/P_0$ that is chosen to be reasonably close to the nominal spatial frequency of the signal. The window function $W(x)$ has the property that it is non-zero over an extent that is narrow compared to the length scale over which the distortion varies, and zero elsewhere. Thus, the single-point Fourier transform is evaluated as follows:

$$\Gamma(x) = \int W(x'-x)I(x')\exp\left(\frac{2\pi i x'}{P_0}\right)dx' \qquad (14)$$

The phase of this complex-valued Fourier transform can next be evaluated:

$$\Theta(x) = \arctan\left[\frac{\Im\{\Gamma(x)\}}{\Re\{\Gamma(x)\}}\right] \qquad (15)$$

Where $\Re\{\Gamma(x)\}$ and $\Im\{\Gamma(x)\}$ denote the real and imaginary portions of $\Gamma(x)$ respectively. The complex phase $\Theta(x)$ will be periodic every $2\pi$ radians, and thus will need to be unwrapped via standard numerical methods known to someone skilled in the art:

$$\Theta_{\text{unwrap}}(x) = unwrap\{\Theta(x)\} \qquad (16)$$

As will be understood, the closer the chosen spatial frequency $1/P_0$ is to the nominal spatial frequency of the signal, the coarser may be the discrete sampling interval without causing the unwrap algorithm to fail.

Finally, the unwrapped phase $\Theta_{\text{unwrap}}(x)$ is converted to a distortion as follows:

$$D(x, \alpha, h) = \frac{P_0}{2\pi}\Theta_{\text{unwrap}}(x) \qquad (17)$$

In an encoder application, relative motion between the scale and the readhead - the desired measurand of the system - causes a bulk displacement of the optical signal across the sensor. An extra term $\delta x$ can now thus be added to equation (8) for D($x, \alpha, h$) in order to accommodate the effects of scale-readhead relative motion in addition to scale-gradient distortion:

$$\Delta d(p, \alpha, h) = F_1(h)\alpha p^2 + F_2(h)\alpha + \delta x \qquad (18)$$

It is now possible to calculate the scale gradient/pitch angle $\alpha$ using this expression, as all other relevant quantities are known. There are different ways this can be achieved, with advantages and disadvantages. One approach is to fit a second-order polynomial curve of the form D($x, \alpha, h$) = A$x^2$ + B to the measured D($x, \alpha, h$), for instance using standard least-squares error minimisation techniques, and determine $\alpha$ from the fit parameter as follows:

$$\alpha = A/F_1(h) \qquad (19)$$

Another approach is to evaluate D($x, \alpha, h$) only at specific locations, e.g.:

- The centre of the image $p$ = 0, yielding D(0, $\alpha, h$)
- A point $x = x_{sample}$, typically located close to the edge of the sensor where the distortion is the largest, yielding $\Delta x$ ($x_{sample}, \alpha, h$)

Under this approach $\alpha$ is evaluated as follows:

$$\alpha = \frac{\Delta x(x_{sample}, \alpha, h) - \Delta x(0, \alpha, h)}{F_1(h)x_{sample}^2} \qquad (20)$$

Alternatively a variation of this latter approach could be taken, where the process is repeated at a small number of sampling points $x = x_{sample\ 1}$, $x = x_{sample\ 2}$, $x = x_{sample\ 3}$... and the results averaged to increase the accuracy of the result.

With the scale gradient angle $\alpha$ thus determined either near-exactly or via appropriate approximations, the final step is to determine a pitch compensation signal/factor that can be used to apply a corrective calibration to the encoder output position. Recall that the presence of local scale pitch causes a macroscopic shift of the optical signal across the sensor (e.g. see Figure 3), in addition to the distortion effect (e.g. see Figure 13) employed by this invention to characterise $\alpha$. Indeed, we have already taught the mathematical form (see e.g. Equation 8), where the $F_2$ term corresponds to the global shift and the Fi term corresponds to the distortion.

Accordingly, the measurement error induced by the scale pitch is the $F_2(h)\alpha$ = -2$h\alpha$ term in the expression for D($x, \alpha, h$). Note that it corresponds to the simplified discussion of the problem surrounding Figure 3 before the effects of distortion were introduced.

A pitch compensation signal $\Delta e_{corr}$ may thus be calculated:

$$\Delta e_{corr} = +2h\alpha \qquad\qquad (21)$$

As described previously, an assumed value of *h* may be applied to determine an approximate corrective factor, or alternatively a near-exact corrective factor may be applied based on independent determination of *h*.

Finally, this pitch compensation signal $\Delta e_{corr}$ can be applied to the position output of the encoder to get a pitch-induced error corrected position output, e.g. as explained above in connection with Figures 7 to 11.

In the embodiment of Figures 13 and 14, there is one sensor 22 which is used to determine both the scale pitch/gradient (and the separations/rideheight) and the relative position of the readhead 4 and scale 6 along the measurement direction x. Advantages of such a configuration include cost efficiency (no additional sensors are required) and improved accuracy because the pitch and/or separation/rideheight measurement is measured at the same point as the position measurement. However, as will be understood, in a manner similar to that described above in connection with Figure 12, separate sensors could be used if desired (e.g. a separate sensor for determining the distortion of a pattern on the scale - which could be the scale features or a pattern adjacent thereto for example - could be provided).

It is worth noting that - in the case the rideheight is accurately determined by an approach such as rideheight-dependent magnification as mentioned above, then the encoder can provide multiple measurement outputs, including any combination of compensated position, rideheight and local scale pitch/gradient.

This may have extra benefit to the user, for instance for tracking installation and running tolerances.

It is also worth noting that the sensor used for characterising pitch/scale gradient via the scale pattern distortions as described above does not need to be an additional, single-purpose sensor 'bolted on' to the readhead to correct for pitch error: it is perfectly possible to use a single sensor both for determining readhead position and compensating for scale gradient/pitch.

Alternative embodiments of the invention include using height/distance sensors located at fore and aft positions along the measuring dimension so as to measure the separation between the scale and readhead. For instance, the readhead could comprise a first capacitive sensor configured to detect the separation between the readhead and scale at a fore position, and a second capacitive sensor configured to detect the separation between the readhead and scale at an aft position. As will be understood, any change in the relative pitch of the scale and readhead will cause a change in the difference of outputs of the first and second capacitive sensors, which can be used to determine a measure of the relative pitch (e.g. similar to that of the split detector 42 embodiment of Figure 12).

In the embodiments described above, the encoder apparatus is an optical encoder apparatus, but this need not necessarily be the case. For instance, the encoder apparatus could be a magnetic, inductive or capacitive encoder apparatus.

## Claims

1. A position encoder apparatus comprising a scale and a readhead comprising at least one scale-signal sensor configured to detect a scale signal from which at least one position signal indicative of the relative position of the scale and readhead along the scale's measuring direction is generated and output, in which the encoder apparatus is configured to compensate for a change in the relative pitch of the readhead and scale so as to reduce pitch-induced position-displacement error in the at least one position signal.

2. A position encoder apparatus as claimed in claim 1, in which the encoder apparatus is configured to monitor continuously, as the scale and readhead move relative to each other, for an indication of a change in the relative pitch of the readhead and scale, and wherein said compensation is based on the outcome of said monitoring.

3. A position encoder apparatus as claimed in claim 2, in which compensating for a change in the relative pitch of the readhead and scale so as to reduce pitch-induced position-displacement error in the at least one position signal comprises, based on the outcome of said monitoring, advancing or retarding the relative position indicated by the at least one position signal.

4. A position encoder apparatus as claimed in any preceding claim, in which said monitoring comprises analysing the deformation of a scale signal falling on a sensor.

5. A position encoder apparatus as claimed in claim 4, in which said monitoring comprises analysing the deformation of a signal falling on the at least one scale-signal sensor which is configured to detect a scale signal from which at least one position signal indicative of the relative position of the scale and readhead is generated.

6. A position encoder apparatus as claimed in claim 5, in which said monitoring comprises analysing the deformation of the scale signal from which the at least one position signal indicative of the relative position of the scale and readhead is generated.

7. A position encoder apparatus as claimed in any preceding claim, which is further configured to determine a separation signal indicative of the separation between the readhead and scale.

8. A position encoder apparatus as claimed in claim 7, wherein the separation signal indicative of the separation between the readhead and scale is factored into said compensating for a change in the relative pitch of the readhead and scale so as to reduce pitch-induced position-displacement error in the at least one position signal.

9. A position encoder apparatus as claimed in any preceding claim, in which the position encoder apparatus is an absolute encoder apparatus.

10. A position encoder apparatus as claimed in any preceding claim, in which the readhead is configured to perform said compensation.

11. A position encoder apparatus comprising a scale and a readhead comprising at least one scale-signal sensor configured to detect a scale signal from which at least one position signal indicative of the relative position of the scale and readhead along the scale's measuring direction can be generated, in which the encoder apparatus is configured to generate at least one such position signal from a scale signal detected by the scale-signal sensor and also configured to determine a separation signal indicative of the separation between the readhead and scale based on a scale signal.

12. A position encoder apparatus as claimed in claim 11, in which the encoder apparatus is configured to determine said separation signal based a scale signal sensed by said at least one scale-signal sensor.

13. A position encoder apparatus as claimed in claim 11 or 12, in which the encoder apparatus is configured to determine said separation signal, and said at least one position signal, based on the same scale signal sensed by said at least one scale-signal sensor.

14. A position encoder apparatus as claimed in any of claims 11 to 13, in which the encoder apparatus is configured to determine said separation signal based on the size of a feature of said scale signal.

15. A position encoder apparatus as claimed in any of claims 11 to 14, in which the encoder apparatus is configured to determine said separation signal based on the period size of said scale signal.

Fig. 1

Fig. 2(a)

Fig. 2(b)

Fig. 3

Fig.4

Fig. 5

Fig. 6

Fig. 7

Fig. 8

Fig. 9

- A'
- B'
- SINE'
- COSINE'
1011101 - Serial Comms'

Pitch Compensation Signal

- A
- B
- SINE
- COSINE

1011101 - Serial Comms

Fig. 10

QUAD-A

QUAD-B

QUADRATURE DECODING 80

POSITION COMPENSATION 82

QUADRATURE GENERATION

(OR SERIAL COMMUNICATION CIRCUITRY) 84

7

PITCH COMPENSATION SIGNAL

Fig. 11

Fig. 12

Fig. 13

(a)

(b)

Fig. 14

Fig. 15

4'

24'

1011101010101011

8

40

42

101110111101

20

22'

Fig. 16

72'

74'

76'

101110111101

POSITION
DECODING/
LOOK-UP TABLE

POSITION
COMPENSATION

SERIAL
COMMUNICATION
CIRCUITRY

24'

44

42

ADC

46'

40

Fig. 17

Europäisches
Patentamt

European
Patent Office

Office européen
des brevets

# EUROPEAN SEARCH REPORT

**Application Number**

EP 23 27 5096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 669 636 A1 (SIEMENS AG [DE]) 4 December 2013 (2013-12-04) * Abstract, Desc. [0001], [0015]-[0046], Figs. 1-4 * | 1-3,9,10 | INV. G01D5/244 G01D5/38 |
| X | US 2008/067332 A1 (MCADAM SIMON E [GB]) 20 March 2008 (2008-03-20) * wAbstract, Desc. [0001], [0022]-[0038], Figs. 1, 3a, 3b, 3c, 5, 6 * | 1,4-8, 11-15 | |
| X | US 2022/373360 A1 (HOLMES DANIEL J [US] ET AL) 24 November 2022 (2022-11-24) * Abstract, Desc. [0033]-[0040], Figs. 6-7 * | 1 | |
| X | US 2021/010807 A1 (HOLZAPFEL WOLFGANG [DE] ET AL) 14 January 2021 (2021-01-14) * Abstract, Desc. [0052]-[0064], [0082]-[0085], Figs. 6a, 6b, 6c, 8a, 8b * | 1 | |
| X | US 2016/258786 A1 (FRITSCH ROBERT [CH] ET AL) 8 September 2016 (2016-09-08) * Abstract, Desc. [0028]-[0033], [0076], Fig. 4c * | 1,5,7,8, 13 | **TECHNICAL FIELDS SEARCHED (IPC)** G01D |
| X | US 2008/094604 A1 (SHIBAZAKI YUICHI [JP]) 24 April 2008 (2008-04-24) * Abstract, Desc. [0011], [0012], [0197], Fig. 10c * | 1 | |

The present search report has been drawn up for all claims

| Place of search | Date of completion of the search | Examiner |
|---|---|---|
| Munich | 31 October 2023 | Reim, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 27 5096

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2023

| Patent document cited in search report | | | Publication date | Patent family member(s) | | | Publication date |
|---|---|---|---|---|---|---|---|
| EP 2669636 | A1 | | 04-12-2013 | NONE | | | |
| US 2008067332 | A1 | | 20-03-2008 | CN | 1973184 | A | 30-05-2007 |
| | | | | EP | 1766335 | A2 | 28-03-2007 |
| | | | | ES | 2706002 | T3 | 27-03-2019 |
| | | | | JP | 5386081 | B2 | 15-01-2014 |
| | | | | JP | 2008503746 | A | 07-02-2008 |
| | | | | US | 2008067332 | A1 | 20-03-2008 |
| | | | | WO | 2005124283 | A2 | 29-12-2005 |
| US 2022373360 | A1 | | 24-11-2022 | US | 2022373360 | A1 | 24-11-2022 |
| | | | | WO | 2022246029 | A1 | 24-11-2022 |
| US 2021010807 | A1 | | 14-01-2021 | CN | 112212809 | A | 12-01-2021 |
| | | | | DE | 102019210274 | A1 | 14-01-2021 |
| | | | | EP | 3764064 | A1 | 13-01-2021 |
| | | | | JP | 2021015114 | A | 12-02-2021 |
| | | | | US | 2021010807 | A1 | 14-01-2021 |
| US 2016258786 | A1 | | 08-09-2016 | CN | 105937918 | A | 14-09-2016 |
| | | | | EP | 3064902 | A1 | 07-09-2016 |
| | | | | US | 2016258786 | A1 | 08-09-2016 |
| US 2008094604 | A1 | | 24-04-2008 | CN | 101405837 | A | 08-04-2009 |
| | | | | CN | 102749812 | A | 24-10-2012 |
| | | | | CN | 102749813 | A | 24-10-2012 |
| | | | | EP | 2071614 | A1 | 17-06-2009 |
| | | | | EP | 2993523 | A2 | 09-03-2016 |
| | | | | EP | 3361317 | A1 | 15-08-2018 |
| | | | | HK | 1173231 | A1 | 10-05-2013 |
| | | | | HK | 1173232 | A1 | 10-05-2013 |
| | | | | HK | 1218168 | A1 | 03-02-2017 |
| | | | | HK | 1252345 | A1 | 24-05-2019 |
| | | | | JP | 5486189 | B2 | 07-05-2014 |
| | | | | JP | 5686126 | B2 | 18-03-2015 |
| | | | | JP | 5761659 | B2 | 12-08-2015 |
| | | | | JP | 5783502 | B2 | 24-09-2015 |
| | | | | JP | 5863155 | B2 | 16-02-2016 |
| | | | | JP | 6015985 | B2 | 26-10-2016 |
| | | | | JP | 6056992 | B2 | 11-01-2017 |
| | | | | JP | 6143137 | B2 | 07-06-2017 |
| | | | | JP | 6332649 | B2 | 30-05-2018 |
| | | | | JP | 6583755 | B2 | 02-10-2019 |
| | | | | JP | 2013034014 | A | 14-02-2013 |
| | | | | JP | 2014122910 | A | 03-07-2014 |
| | | | | JP | 2015008306 | A | 15-01-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 27 5096

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2023

| Patent document cited in search report | Publication date | Patent family member(s) | | Publication date |
|---|---|---|---|---|
| | | JP | 2015111695 A | 18-06-2015 |
| | | JP | 2015180967 A | 15-10-2015 |
| | | JP | 2016114951 A | 23-06-2016 |
| | | JP | 2016136267 A | 28-07-2016 |
| | | JP | 2017010042 A | 12-01-2017 |
| | | JP | 2018151646 A | 27-09-2018 |
| | | JP | WO2008029758 A1 | 21-01-2010 |
| | | KR | 20090060213 A | 11-06-2009 |
| | | KR | 20130105917 A | 26-09-2013 |
| | | KR | 20140081899 A | 01-07-2014 |
| | | KR | 20140119801 A | 10-10-2014 |
| | | KR | 20150015006 A | 09-02-2015 |
| | | KR | 20150015007 A | 09-02-2015 |
| | | KR | 20150119494 A | 23-10-2015 |
| | | KR | 20160034427 A | 29-03-2016 |
| | | KR | 20170089987 A | 04-08-2017 |
| | | KR | 20180058861 A | 01-06-2018 |
| | | SG | 174740 A1 | 28-10-2011 |
| | | SG | 10201407218X A | 29-01-2015 |
| | | TW | 200830056 A | 16-07-2008 |
| | | TW | 201506557 A | 16-02-2015 |
| | | TW | 201506558 A | 16-02-2015 |
| | | TW | 201610608 A | 16-03-2016 |
| | | TW | 201631410 A | 01-09-2016 |
| | | TW | 201633013 A | 16-09-2016 |
| | | TW | 201706729 A | 16-02-2017 |
| | | TW | 201727390 A | 01-08-2017 |
| | | TW | 201809913 A | 16-03-2018 |
| | | US | 2008094604 A1 | 24-04-2008 |
| | | US | 2014354972 A1 | 04-12-2014 |
| | | US | 2018101104 A1 | 12-04-2018 |
| | | WO | 2008029758 A1 | 13-03-2008 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2005002431 W
- WO 2005124283 A
- WO 2002084223 A
- US 7499827 B
- US 5279044 A
- WO 2005124282 A
- EP 0826138 A
- US 5861953 A
- US 8525102 B
- US 9952068 B
- WO 2010139964 A
- US 20120072169 A